# EUROPEAN PATENT APPLICATION

(11) **EP 3 276 472 A1**
(43) Date of publication of application: **31.01.2018**
(21) Application number: 15886472.8
(22) Date of filing: 30.10.2015
(51) Int. Cl.: G06F 3/048, G06F 3/041

(54) **BROWSING ASSISTANCE METHOD FOR ELECTRONIC BOOK, AND BROWSING ASSISTANCE PROGRAM**

(30) Priority: 26.03.2015 JP 2015064732
(71) Applicant: Misumi Group Inc., Tokyo 112-8583 (JP)
(72) Inventor: TANIGUCHI, Koichi, Tokyo 112-8583 (JP)
(74) Representative: Schön, Christoph
(86) International application number: PCT/JP2015/080735
(87) International publication number: WO 2016/151920

(57) **Abstract**

When it is detected by a touch position detecting circuit (21) that a pointer F has made a displacement specifying folding of a corner, in a state in which an electronic book browsing screen (40) is displayed on a touch panel display portion (20), a bookmark registering portion (11) changes the display to a display (61) in which the corner is folded and performs bookmark registration of the displayed page. When it is detected by the touch position detecting circuit (21) that the pointer F has made a displacement specifying page feed, in a state in which the bookmark-registered page is displayed on the browsing screen (40), a bookmark feeding portion (12) switches the page to a different bookmark-registered page and displays the page.

## Description

### Technical Field

The present invention relates to a method and a program for assisting browsing of an electronic book by a touch panel display apparatus.

### Background Art

Conventionally, various methods for facilitating browsing of an electronic book by a touch panel apparatus (an apparatus comprising a touch panel display portion, such as a tablet terminal, a smartphone and a personal computer) have been proposed (for example, see Patent Literature 1).

A touch panel apparatus described in Patent Literature 1 performs, when a touch operation of folding a corner (a corner part) of a page displayed on a touch panel display is performed by a user (a browser), a process for setting a bookmark on the page on which the touch operation of folding has been performed.

Furthermore, the touch panel apparatus described in Patent Literature 1 sets a degree of importance of the bookmark according to the number of times of the operation of folding the corner of the page and performs a process for canceling the setting of the bookmark when the user performs a touch operation of spreading the folded corner of the page.

### Citation List

### Patent Literature

Patent Literature 1: Japanese Patent Laid-Open No. 2013-218693

### Summary of Invention

### Technical Problem

At the time of browsing an electronic book such as a catalog by a touch panel apparatus, it is desired to be able to fold a corner of a page of interest, as a bookmark while turning over pages similarly to the case of browsing a paper medium book so that information in the electronic book can be efficiently re-searched by using the bookmark.

The present invention has been made in view of such a background, and an object is to provide an electronic book browsing assistance method and an electronic book browsing assistance program making it possible to efficiently re-search for target information.

### Solution to Problem

The present invention has been made to achieve the above object, and an electronic book browsing assistance method of the present invention is:
a method for assisting browsing of an electronic book by a touch panel apparatus, the touch panel apparatus comprising a touch panel display portion, a touch position detecting portion configured to detect a touch position of a pointer on the touch panel display portion, and a control portion configured to change display of the touch panel display portion according to the touch position of the pointer detected by the touch position detecting portion, the method comprising:
   a bookmark registering step of, when it is detected by the touch position detecting portion that the pointer that has touched the touch panel display portion has made a displacement specifying folding of a corner of a page displayed on the browsing screen, in a state in which an electronic book browsing screen is displayed on the touch panel display portion, the control portion changing the display of the page to display in which the corner of the page is folded and performing bookmark registration of the page; and
   a bookmark feeding step of, when it is detected by the touch position detecting portion that the pointer that has touched the touch panel display portion has made a displacement specifying page feed, in a state in which the bookmark-registered page is displayed on the browsing screen, the control portion switching the page to a different bookmark-registered page and displaying the page.

According to the present invention, when a user makes a pointer (the user's finger, a touch pen or the like) touch the touch panel display portion and performs an operation of specifying folding of a corner of a page displayed on the browsing screen while browsing an electronic book by the touch panel apparatus, the bookmark registering step is executed by the control portion, and the display is changed to display in which the corner of the displayed page is folded, and bookmark registration is performed. Therefore, the user can fold a corner of a page and set a bookmark similarly to the case of browsing a book made of paper.

Then, when, in a state in which the page the corner of which is folded and which has been bookmark-registered is displayed on the browsing screen, the user makes the pointer touch the touch panel display portion and performs an operation of specifying page feed, the bookmark feeding step is performed by the control portion, and a different bookmark-registered page is displayed. Therefore, the user can efficiently re-search for target information while sequentially switching among only bookmark-registered pages and visually confirming the pages.

Next, an electronic book browsing assistance program of the present invention is:
an electronic book browsing assistance program executed in a touch panel apparatus by a control portion, the touch panel apparatus comprising a touch panel display portion, a touch position detecting portion configured to detect a touch position of a pointer on the touch panel display portion, and the control portion configured to change display of the touch panel display portion according to the touch position of the pointer detected by the touch position detecting portion, the electronic book browsing assistance program causing the control portion to function as:
a bookmark registering portion configured to, when it is detected by the touch position detecting portion that the pointer that has touched the touch panel display portion has made a displacement specifying folding of a corner of a page displayed on the browsing screen, in a state in which an electronic book browsing screen is displayed on the touch panel display portion, change the display of the page to display in which the corner of the page is folded and perform bookmark registration of the page; and
a bookmark feeding portion configured to, when it is detected by the touch position detecting portion that the pointer that has touched the touch panel display portion has made a displacement specifying page feed, in a state in which the bookmark-registered page is displayed on the browsing screen, switch the page to a different bookmark-registered page and display the page.

According to the present invention, when the user makes a pointer (the user's finger, a touch pen or the like) touch the touch panel display portion and performs an operation of specifying folding of a corner of a page displayed on the browsing screen while browsing an electronic book by the touch panel apparatus, the corner of the displayed page is folded and bookmark-registered by the bookmark registering portion. Therefore, the user can fold a corner of a page and set a bookmark similarly to the case of browsing a book made of paper.

Then, when, in a state in which the page the corner of which is folded and which has been bookmark registered is displayed on the browsing screen, the user makes the pointer touch the touch panel display portion and performs an operation of specifying page feed, a different bookmark-registered page is displayed by the bookmark feeding portion. Therefore, the user can efficiently re-search for target information while sequentially switching among only bookmark-registered pages and visually confirming the pages.

Further, the bookmark registering portion performs the bookmark registration at a plurality of levels; when it is detected by the touch position detecting portion that the pointer that has touched the touch panel display portion has made a displacement specifying folding of the corner of the page, in a state in which a page the corner of which is not folded is displayed on the browsing screen, the bookmark registering portion changes the display to display in which the corner is folded and performs bookmark registration at a first level for the page the corner of which is folded; and, when it is detected by the touch position detecting portion that the pointer that has touched the touch panel display portion has made a displacement specifying returning of a folded part of the page, in a state in which the page the corner of which is folded is displayed on the browsing screen, the bookmark registering portion changes the display to display in which the folded part is spread, and there is a fold mark and performs bookmark registration at a second level for the page with the fold mark; and
when it is detected by the touch position detecting portion that the pointer that has touched the touch panel display portion has made a displacement specifying page feed, in a state in which the page that is bookmark-registered at the first level is displayed on the browsing screen, the bookmark feeding portion switches the page to a different page that is bookmark-registered at the first level and displays the page; and, when it is detected that the pointer that has touched the touch panel display portion has made a displacement specifying page feed, in a state in which the page that is bookmark-registered at the second level is displayed on the browsing screen, the bookmark feeding portion switches the page to a different page that is bookmark-registered at the second level and displays the page.

According to the present invention, when, in a state in which a page the corner of which is not folded is displayed on the browsing screen, the user makes the pointer touch the touch panel display portion and performs an operation of specifying folding of the corner of the page, the page the corner of which is folded is bookmark-registered at the first level by the bookmark registering portion.

Further, when, in a state in which the page the corner of which is folded is displayed on the browsing screen, the user makes the pointer touch the touch panel display portion and performs an operation of specifying returning of the folded part, the display is changed to display in which the folded part is spread, and there is a fold mark, and the page with the fold mark is bookmark-registered at the second level by the bookmark registering portion.

Then, when, in a state in which the page the corner of which is folded is displayed on the browsing screen, the user makes the pointer touch the touch panel display portion and performs an operation of specifying page feed, different pages that are bookmark-registered at the first level are sequentially displayed by the bookmark feeding portion.

Further, when, in a state in which the page the corner of which has a fold mark is displayed on the browsing screen, the user makes his finger touch the touch panel display portion and performs an operation of specifying page feed, different pages that are bookmark-registered at the second level are sequentially displayed by the bookmark feeding portion.

Therefore, the user can fold a corner of a page of an electronic book that is frequently browsed and perform bookmark registration of the page at the first level, and, as for a page that was bookmark-registered at the first level but, after that, not browsed so frequently, the folded part of the page can be returned, and the page can be changed to the second bookmark registration.

By making the pointer touch the touch panel display portion and performing an operation of specifying page feed when a page the corner of which is folded or has a fold mark is displayed on the browsing screen, the user can efficiently perform re-search for target information by sequentially displaying only pages that are bookmark-registered at the first level or only pages that are bookmark-registered at the second level by the bookmark feeding portion.

### Brief Description of Drawings

FIG. 1 is an external appearance diagram of a touch panel apparatus on which an electronic book browsing assistance method and electronic book browsing assistance program of the present invention are executed.
FIG. 2 is a configuration diagram of the touch panel shown in FIG. 1.
FIG. 3 is a first flowchart of a bookmark registration process.
FIG. 4 is a second flowchart of a bookmark registration process.
FIG. 5 is a diagram of a page corner folding operation.
FIG. 6A is a diagram of an operation of spreading a folded page corner to return the page corner to an original state, and FIG. 6B is a diagram of an operation of erasing a fold mark.
FIG. 7 is a flowchart of a page feeding process.
FIG. 8 is a diagram of a page feed operation of a page the corner of which is folded.

### Description of Embodiment

An example of an embodiment of the present invention will be described with reference to FIG.s 1 to 8.

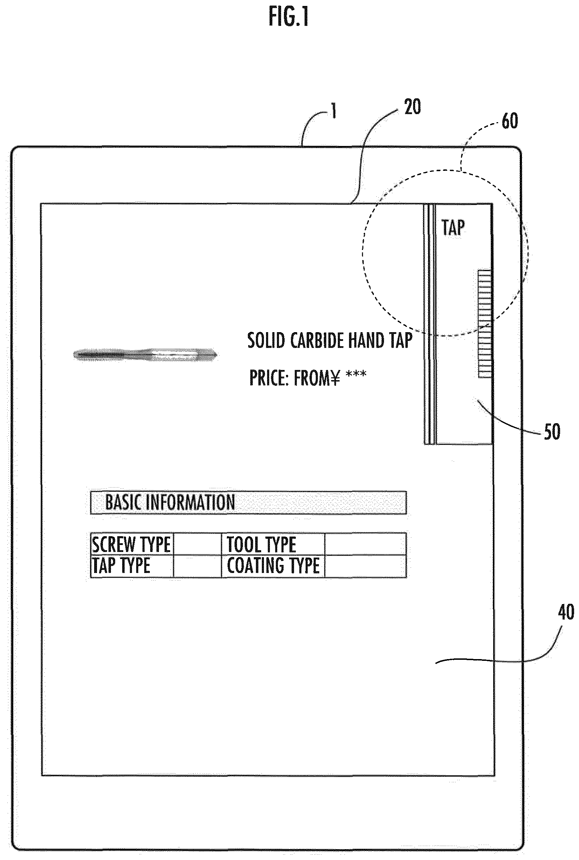

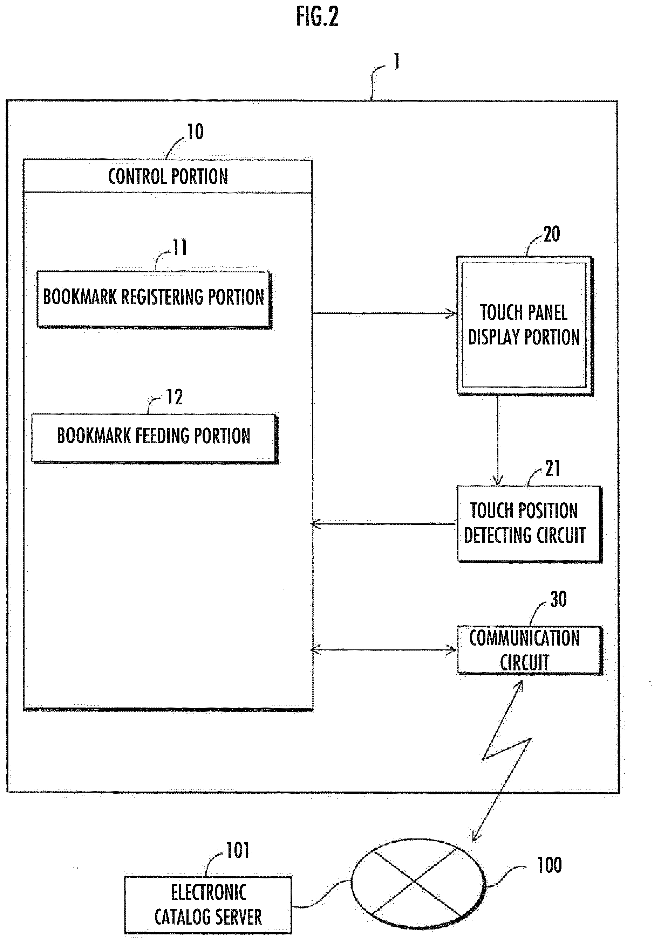

With reference to FIG. 1, a touch panel apparatus 1 on which an electronic book browsing assistance method and electronic book browsing assistance program of the present invention are executed comprises a touch panel display portion 20 arranged on the front of a housing, and a control portion 10 arranged in the housing and configured to control display of the touch panel display portion 20 (see FIG. 2). The touch panel display portion 20 is configured, for example, by overlapping a transparent touch panel on the surface of a liquid crystal display.

FIG. 1 shows a state in which a browsing screen 40 of an electronic catalog for tools (corresponding to an electronic book of the present invention) is displayed, and an index 50 is displayed near an upper right corner 60 (a corner part) of a page displayed on the browsing screen 40. The index 50 shows a tool genre to which the page displayed on the browsing screen 40 belongs. The upper right corner of the page displayed on the browsing screen 40 will be hereinafter referred to simply as a corner.

Next, with reference to FIG. 2, the touch panel apparatus 1 comprises a touch position detecting circuit 21 configured to detect a position of a pointer (a user's finger, a touch pen or the like) that has touched the touch panel display portion 20 (corresponding to a touch position detecting portion of the present invention) and a communication circuit 30, in addition to the control portion 10 and the touch panel display portion 20.

The control portion 10 is an electronic circuit unit configured with a CPU, a memory, an interface circuit and the like that are not shown, and the control portion 10 functions as a bookmark registering portion 11 and a bookmark feeding portion 12 to be described later by executing the electronic book browsing assistance program held in the memory by the CPU.

The control portion 10 performs an electronic book browsing process in response to a touch operation on the touch panel display portion 20 by the user. In this case, both of data of an electronic book and bookmark data of the electronic book may be held in the memory or may be downloaded from an electronic catalog server 101 via a communication network 100.

Next, an electronic book bookmark registration process executed by the control portion 10 will be described in accordance with a flowchart shown in FIG.s 3 and 4.

When an operation of starting an electronic book browsing application is performed by the user, the control portion 10 executes a program of this application (including the electronic book browsing assistance program of the present invention) by the CPU and displays the electronic book browsing screen 40 on the touch panel display portion 20 as shown in FIG. 1. The program of the electronic book browsing application may be held in the memory in advance or may be downloaded from the electronic catalog server 101 or the like.

Then, the bookmark registering portion 11 of the control portion 10 executes the process by the flowchart in FIG.s 3 and 4, and performs bookmark registration or cancellation in response to an operation of folding of the upper right corner 60 of a page displayed on the browsing screen 40 or returning (opening the folded part) (see FIG. 1).

The bookmark registration process by the bookmark registering portion 11 corresponds to a bookmark registering step in the electronic book browsing assistance method of the present invention.

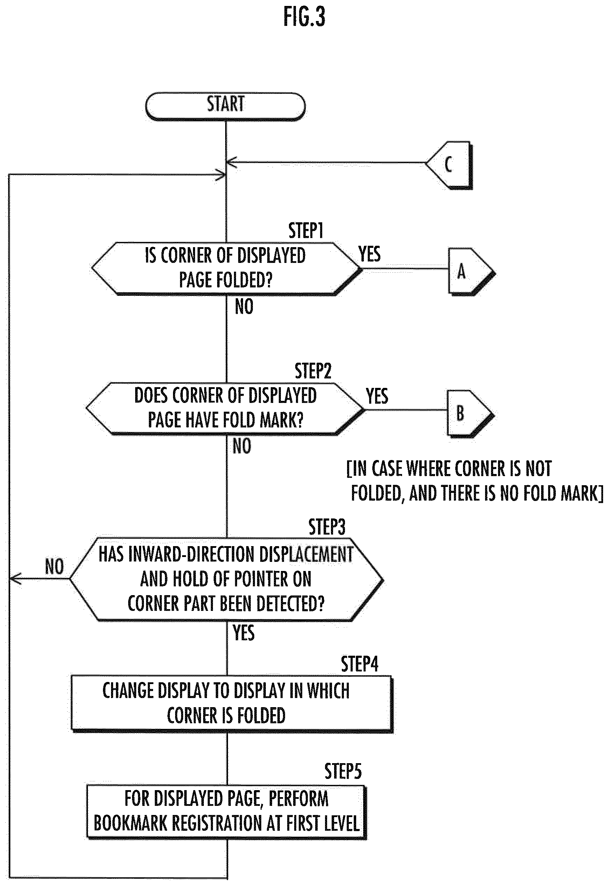

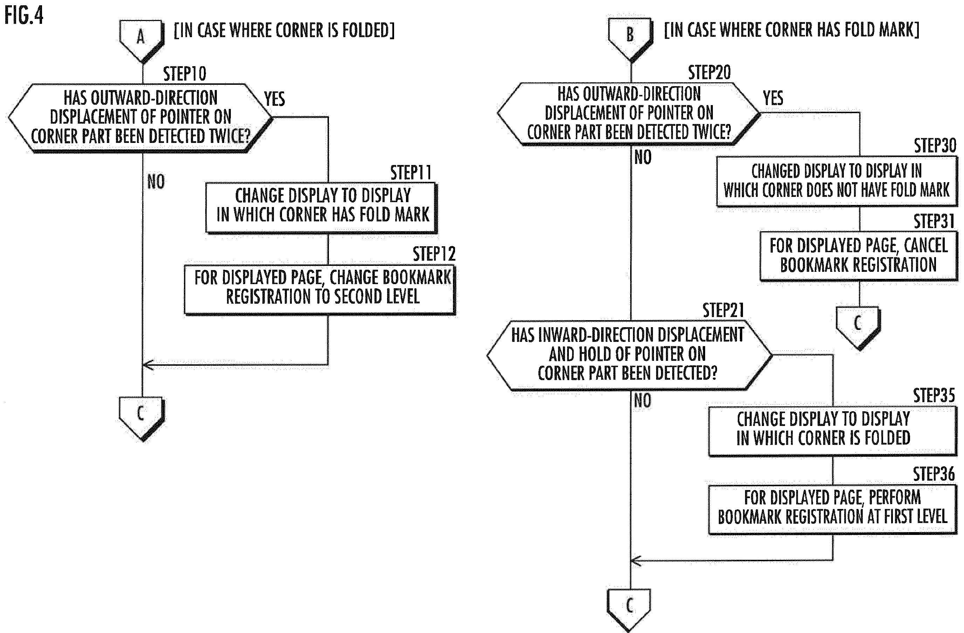

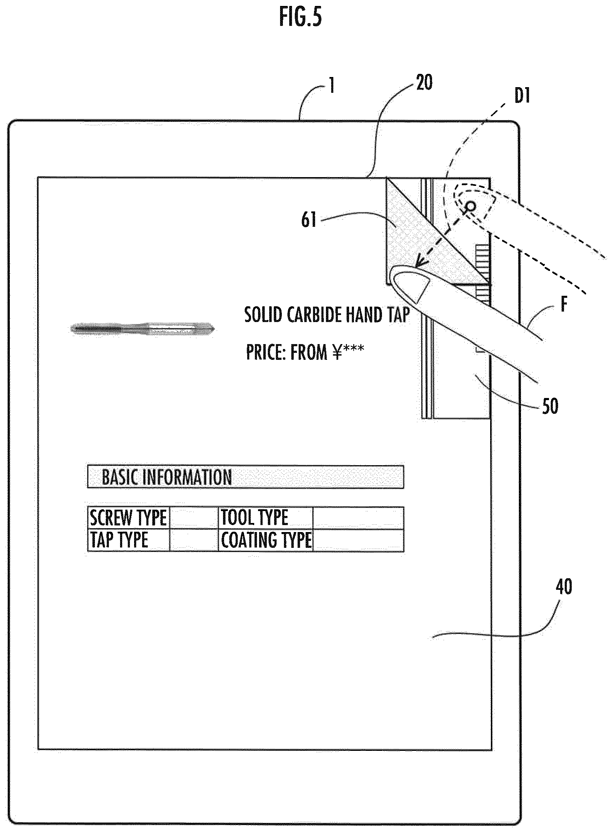

At STEP 1 in FIG. 3, the bookmark registering portion 11 judges whether the corner of the page displayed on the browsing screen 40 is folded or not (whether a state of the corner being folded (a bookmark) 61 is displayed as shown in FIG. 5 or not). Then, the process branches to STEP 10 in FIG. 4 if the corner is folded, and proceeds to STEP 2 if the corner is not folded.

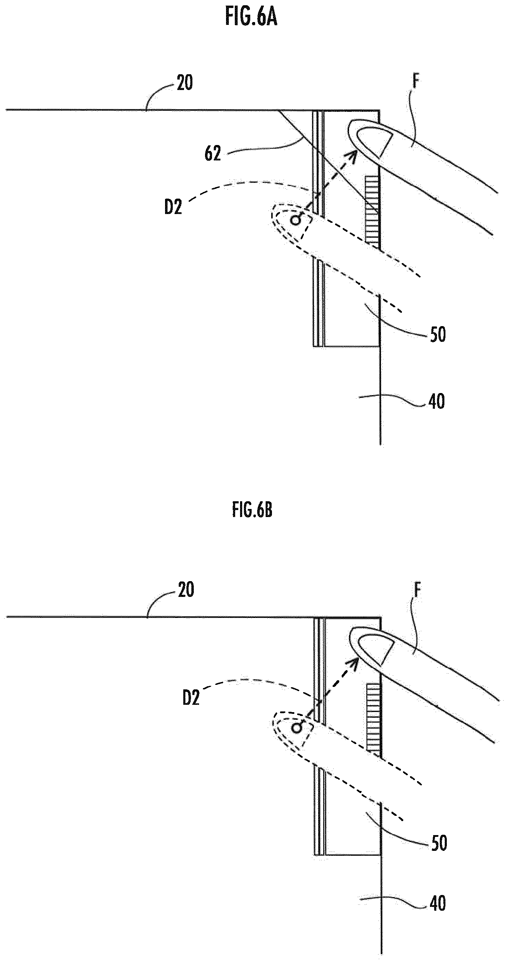

At STEP 2, the bookmark registering portion 11 judges whether the corner of the displayed page has a fold mark or not (whether a fold mark 62 is displayed as shown in FIG. 6A or not). Then, the process branches to STEP 20 in FIG. 4 if there is a fold mark, and proceeds to STEP 3 if there is not a fold mark.

At STEP 3 (in a case where the corner part of the page is not folded, and there is not a fold mark), the bookmark registering portion 11 judges whether or not it has been detected by the touch position detecting circuit 21 that a pointer F (the user's finger) that touched the corner part has been displaced in an inward direction D 1 of the page and has stopped (whether or not the user has performed an operation of sliding the pointer F in the inward direction D1 and holding it there) as shown in FIG. 5.

It is for the purpose of distinction from a page feed instruction by a flick operation to judge whether the pointer has stopped (has been held).

Then, if it is detected that the pointer F has been displaced in the inward direction D1, the process proceeds to STEP 4. If it is not detected that the pointer F has been displaced in the inward direction D1, the process returns to STEP 1.

At STEP 4, the bookmark registering portion 11 changes the state to the state in which the bookmark 61, which is the folded corner part of the page, is displayed as shown in FIG. 5. At STEP 5, the bookmark registering portion 11 performs bookmark registration at a first level for the displayed page and returns to STEP 1.

At STEP 10 in FIG. 4 (in the case where the corner part is folded), the bookmark registering portion 11 judges whether or not it is detected by the touch position detecting circuit 21 twice that the pointer F that touched the corner part has been displaced in an outward direction D2 of the page (whether or not the user has performed a slide operation in the outward direction D2 twice) as shown in FIG. 6A.

Then, if it is detected twice that the pointer F has been displaced in the outward direction D2 of the page, the process branches to STEP 11. If it is not detected twice that the pointer F has been displaced in the outward direction D2, the process returns to STEP 1 in FIG. 3.

At STEP 11, the bookmark registering portion 11 spreads the folded part of the corner of the page and changes the display to display having the fold mark 62 as shown in FIG. 6A. At STEP 12, the bookmark registering portion 11 changes the bookmark registration of the displayed page from the first level to the second level and returns to STEP 1 in FIG. 3.

Further, at STEP 20 in FIG. 4, the bookmark registering portion 11 judges whether or not it is detected by the touch position detecting circuit 21 twice that the pointer F that touched the corner part has been displaced in the outward direction D2 of the page (whether or not the user has performed a slide operation in the outward direction D2 twice) as shown in FIG. 6B.

Then, if it is detected twice that the pointer F has been displaced in the outward direction D2 of the page, the process branches to STEP 30. If it is not detected twice that the pointer F has been displaced in the outward direction D2, the process proceeds to STEP 21.

At STEP 30, the bookmark registering portion 11 changes the display of the corner part of the page to display without a fold mark as shown in FIG. 6B. At STEP 31, the bookmark registering portion 11 cancels the bookmark registration of the displayed page and returns to STEP 1 in FIG. 3.

At STEP 21, the bookmark registering portion 11 judges whether or not it has been detected by the touch position detecting circuit 21 that the pointer F (the user's finger) that touched the corner part has been displaced in the inward direction D1 of the page and has stopped (whether the user has performed an operation of sliding the pointer F in the inward direction D1 and holding it there) as shown in FIG. 5.

Then, if it is detected that the pointer F has been displaced in the inward direction D1 and has stopped, the process branches to STEP 35. If it is not detected that the pointer F has been displaced in the inward direction D1 and has stopped, the process returns to STEP 1 in FIG. 3.

At STEP 35, the bookmark registering portion 11 changes the state to the state in which the bookmark 61, which is the folded corner part of the page, is displayed as shown in FIG. 5. At STEP 36, the bookmark registering portion 11 performs bookmark registration at the first level for the displayed page and returns to STEP 1 in FIG. 3.

By the processes of the flowchart in FIG.s 3 and 4 described above, the bookmark registering portion 11 performs processes of (1) performing bookmark registration of a page the corner of which is folded, at the first level, (2) performing bookmark registration of a page with a fold mark at a corner, at the second level, and (3) not performing bookmark registration or canceling bookmark registration as for a page the corner of which is not folded and which does not have a fold mark.

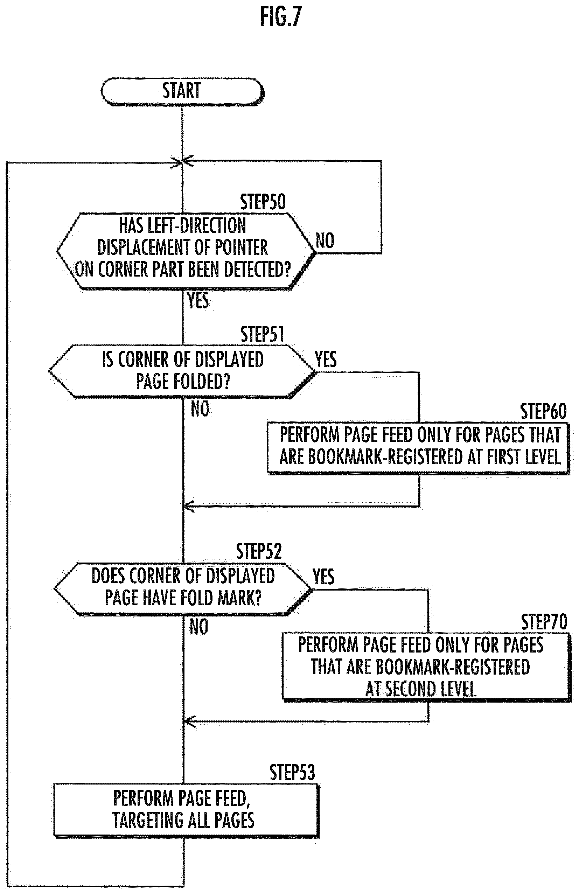

Next, the bookmark feeding portion 12 executes a process by a flowchart shown in FIG. 7 to execute a page feeding process according to the state of bookmark registration of each page.

The bookmark feeding process by the bookmark feeding portion 12 corresponds to a bookmark feeding step in the electronic book browsing assistance method of the present invention.

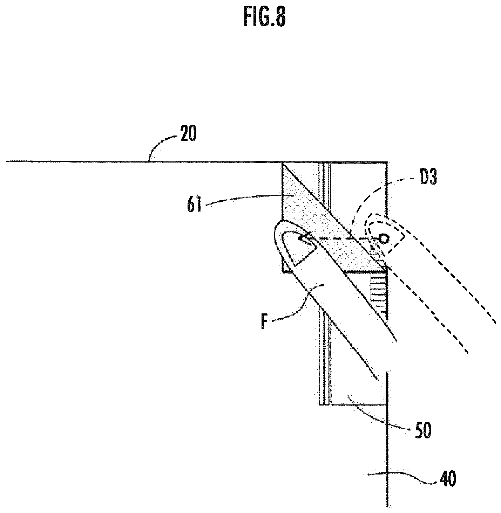

At STEP 50 in FIG. 7, when it is detected by the touch position detecting circuit 21 that the pointer F that touched the corner part has been displaced in a left direction D3 as shown in FIG. 8, the bookmark feeding portion 12 proceeds to STEP 51.

At STEP 51, the bookmark feeding portion 12 judges whether the corner of the page displayed on the browsing screen 40 is folded or not (whether the first level bookmark registration has been performed or not). Then, if the corner is folded, the process branches to STEP 60, and the bookmark feeding portion 12 performs page feed of switching the page to a different page that is bookmark-registered at the first level and displaying the page (page feed limited to pages that are bookmark-registered at the first level). On the other hand, if the corner part is not folded, the process proceeds to STEP 52.

At STEP 52, the bookmark feeding portion 12 judges whether or the corner of the page displayed on the browsing screen 40 has a fold mark or not (whether the second level bookmark registration has been made or not). Then, if the corner part has a fold mark, the process branches to STEP 70, and the bookmark feeding portion 12 performs page feed of switching the page to a different page that is bookmark-registered at the second level and displaying the page (page feed limited to pages that are bookmark-registered at the second level). On the other hand, when the corner part does not have a fold mark, the process proceeds to STEP 53.

At STEP 53, the bookmark feeding portion 12 performs page feed, targeting all the pages of the electronic book regardless of whether the pages are bookmark-registered or not.

By the process by the flowchart in FIG.s 3 and 4 by the bookmark feeding portion 12 described above, the user can perform page feed for each level of bookmark registration (first level, second level and without bookmark registration) and efficiently re-search pages that were classified into levels based on folding or a fold mark of the corner part and bookmark-registered for re-browsing.

Though a case of a user touching the touch panel display portion 20 with a finger to perform an operation has been shown in the present embodiment, a process in the case of operating the touch panel display portion 20 using a touch pen or the like is similar.

Further, though an example of performing bookmark registration by folding an upper right corner of a page has been shown in the present embodiment, bookmark registration by folding an upper left corner, a lower right corner or a lower left corner may be performed.

Further, when a slide operation of a pointer in an inward direction from a corner part of a page is performed, the corner part is folded in the present embodiment. However, the operation of specifying folding of a corner is not limited thereto, and a corner may be folded when a different operation is performed.

Further, when a slide operation of a pointer in an outward direction from a corner of a page is performed, a fold of a corner is returned (spread), and a fold mark is erased in the present embodiment. However, the operation of specifying returning of a fold and erasure of a fold mark is not limited thereto, and returning of a fold of a corner part and erasure of a fold mark may be performed when a different operation is performed.

Further, though page feed is performed when a slide operation of a pointer in a left side direction from a corner part of a page is performed in the present embodiment, the operation of specifying page feed is not limited thereto, and page feed may be performed when a different operation is performed.

Further, though bookmark registration at a plurality of levels is performed based on a fold and a fold mark of a corner in the present embodiment, the effect of the present invention can be also obtained when the bookmark registration at a plurality of levels is not performed.

### Reference Signs List

- 1: touch panel apparatus
- 10: control portion
- 11: bookmark registering portion
- 12: bookmark feeding portion
- 20: touch panel display portion
- 21: touch position detecting circuit
- 30: communication circuit
- 40: electronic book browsing screen
- 50: index
- 60: corner part
- 61: bookmark by fold of corner part
- 62: fold mark
- F: user's finger (pointer)

## Claims

1. An electronic book browsing assistance method, the method being a method for assisting browsing of an electronic book by a touch panel apparatus, the touch panel apparatus comprising a touch panel display portion, a touch position detecting portion configured to detect a touch position of a pointer on the touch panel display portion, and a control portion configured to change display of the touch panel display portion according to the touch position of the pointer detected by the touch position detecting portion, the method comprising:
a bookmark registering step of, when it is detected by the touch position detecting portion that the pointer that has touched the touch panel display portion has made a displacement specifying folding of a corner of a page displayed on the browsing screen, in a state in which an electronic book browsing screen is displayed on the touch panel display portion, the control portion changing the display of the page to display in which the corner of the page is folded and performing bookmark registration of the page; and
a bookmark feeding step of, when it is detected by the touch position detecting portion that the pointer that has touched the touch panel display portion has made a displacement specifying page feed, in a state in which the bookmark-registered page is displayed on the browsing screen, the control portion switching the page to display a different bookmark-registered page.

2. An electronic book browsing assistance program executed in a touch panel apparatus by a control portion, the touch panel apparatus comprising a touch panel display portion, a touch position detecting portion configured to detect a touch position of a pointer on the touch panel display portion, and the control portion configured to change display of the touch panel display portion according to the touch position of the pointer detected by the touch position detecting portion, the electronic book browsing assistance program causing the control portion to function as:
a bookmark registering portion configured to, when it is detected by the touch position detecting portion that the pointer that has touched the touch panel display portion has made a displacement specifying folding of a corner of a page displayed on the browsing screen, in a state in which an electronic book browsing screen is displayed on the touch panel display portion, change the display of the page to display in which the corner of the page is folded and perform bookmark registration of the page; and
a bookmark feeding portion configured to, when it is detected by the touch position detecting portion that the pointer that has touched the touch panel display portion has made a displacement specifying page feed, in a state in which the bookmark-registered page is displayed on the browsing screen, switch the page to display a different bookmark-registered page.

3. The electronic book browsing assistance program according to claim 2, wherein
the bookmark registering portion performs the bookmark registration at a plurality of levels; when it is detected by the touch position detecting portion that the pointer that has touched the touch panel display portion has made a displacement specifying folding of the corner of the page, in a state in which a page the corner of which is not folded is displayed on the browsing screen, the bookmark registering portion changes the display to display in which the corner is folded and performs bookmark registration at a first level for the page the corner of which is folded; and, when it is detected by the touch position detecting portion that the pointer that has touched the touch panel display portion has made a displacement specifying returning of a folded part of the page, in a state in which the page the corner of which is folded is displayed on the browsing screen, the bookmark registering portion changes the display to display in which the folded part is spread, and there is a fold mark and performs bookmark registration at a second level for the page with the fold mark; and
when it is detected by the touch position detecting portion that the pointer that has touched the touch panel display portion has made a displacement specifying page feed, in a state in which the page that is bookmark-registered at the first level is displayed on the browsing screen, the bookmark feeding portion switches the page to display a different page that is bookmark-registered at the first level; and, when it is detected that the pointer that has touched the touch panel display portion has made a displacement specifying page feed, in a state in which the page that is bookmark-registered at the second level is displayed on the browsing screen, the bookmark feeding portion switches the page to display a different page that is bookmark-registered at the second level.
